Europäisches Patentamt

European Patent Office

Office européen des brevets

(19)

(11) Publication number: 0 379 014
A2

# EUROPEAN PATENT APPLICATION

(12)

(21) Application number: 90100241.0

(22) Date of filing: 05.01.90

(51) Int. Cl.⁵: **C08G 75/02, C08L 81/02, C08K 3/40**

(30) Priority: 09.01.89 JP 2280/89

(43) Date of publication of application:
25.07.90 Bulletin 90/30

(84) Designated Contracting States:
**BE CH DE FR GB IT LI NL SE**

(71) Applicant: **IDEMITSU PETROCHEMICAL CO. LTD.**
1-1, Marunouchi 3-chome Chiyoda-ku Tokyo(JP)

(72) Inventor: **Koyama, Yoshinari**
c/o Idemitsu Petrochem.Co. Ltd., 1-1 Anesakikaigan

Ichihara-shi, Chiba-ken(JP)
Inventor: **Omori, Masao**
c/o Idemitsu Petrochem.Co.Ltd., 1-1 Anesakikaigan
Ichihara-ku, Chiba-ken(JP)
Inventor: **Senga, Minoru**
c/o Idemitsu Petrochem.Co. Ltd, 1660, Kamiizumi
Sodegaura-machi, Kimitsu-gun, Chiba-ken(JP)

(74) Representative: **TER MEER - MÜLLER - STEINMEISTER & PARTNER**
**Mauerkircherstrasse 45**
**D-8000 München 80(DE)**

(54) Polyarylene sulfides, process for preparation of the same, and resin compositions containing the same.

(57) A polyarylene sulfide has a ratio of weight-average molecular weight [Mw] to number-average molecular weight [Mn], a Mw/Mn, ranging from 2 to 5. The polyarylene sulfide is prepared by reacting a dihalo-aromatic compound with a sulfur source in an organic polar solvent at a temperature ranging from 220 °C to 280 °C for 0.1 to 2 hours, yielding the polyarylene sulfide in a crude form and washing the crude polyarylene sulfide with an organic polar solvent at a temperature ranging from 100 °C to 220 °C. Further, a resih composition is prepared by blending 100 parts by weight of the polyarylene sulfide with a filler in an amount ranging from 0.5 part to 500 parts by weight.

The polyarylene sulfide is provided with further improved properties, such as mechanical strength, heat deterioration resistance, chemical resistance and long-lasting durability.

EP 0 379 014 A2

FIG. 4

## POLYARYLENE SULFIDES, PROCESS FOR PREPARATION OF THE SAME, AND RESIN COMPOSITIONS CONTAINING THE SAME

The present invention relates to polyarylene sulfides, a process for the preparation of the polyarylene sulfides, and resin compositions containing the polyarylene sulfides. More particularly, the present invention relates to polyarylene sulfides, which have excellent mechanical strength, favorable chemical resistance and heat deterioration resistance, which are not caused to reduce their physical properties such as durability over a long period of time, as well as which are superior in moldability and narrow in a distribution of molecular weights so as to be capable of appropriately molding into uniform films and fibers with no or little thread breakages, to a process for preparing the polyarylene sulfides having such advantages as have been described hereinabove for a short period of time for polymerization and with a high efficiency, and to resin compositions containing such polyarylene sulfides, which can be conveniently used for various molded articles, films, fibers, molding materials for mechanical, electrical and electronical parts, and so on.

Polyarylene sulfides such as polyphenylene sulfides and so on are mainly thermoplastic resins although a portion thereof is thermosetting, and they are widely utilized as engineering plastics because they are excellent in chemical resistance and favorable in mechanical properties over a broad range of temperatures, heat rigidity resistance, and so on.

The polyarylene sulfides obtainable by conventional processes have a broad molecular weight distribution as high as a ratio of weight-average molecular weight [Mw] to number-average molecular weight [Mn], i.e., Mw/Mn ranging usually from about 5.5 to about 20. For the conventional polyarylene sulfides having such a broad molecular weight distribution, their components having a large molecular weight may cause reducing their moldability while their components having a small molecular weight may cause a reduction in mechanical strength such as impact resistance, etc., as well as in heat deterioration resistance, chemical resistance, long-lasting durability, and so on.

For instance, if the moldability is caused to be reduced on account of the high molecular weight components, the reduction may prevent the polymer from being drawn or stretched in a uniform manner, whereby no uniform film can be produced. This may further incur the problem that spun fibers cause thread breakages. This problem may be seen to a remarkable extent in such polyarylene sulfides of a thermally cross-linked type containing components having a supermolecular weight.

Therefore, demands have long been made to provide such polyarylene sulfides as having a narrow distribution of molecular weights, a good moldability, particularly formability such as stretching or drawing, so as to form uniform films and fibers without thread breakages, as well as high physical properties without reducing mechanical strength such as impact resistance or the like, heat deterioration resistance, chemical resistance, and so on, and excellent stability.

The present invention has the object to provide polyarylene sulfides which are so excellent in moldability that they can be molded into uniform films and fibers without causing thread breakages and so flowable that they can be molded into favorable injection moldings, and which are so narrow in a distribution of molecular weights that their superior physical properties are retained without causing any significant reduction in a mechanical strength such as impact resistance, etc., a resistance to heat deterioration, a chemical resistance, a long-lasting durability, and so on.

The present invention has another object to provide a process for the preparation of the polyarylene sulfides having the advantages as have been described hereinabove for a short period of time for polymerization and with a high efficiency.

The present invention has a further object to provide a resin composition containing the polyarylene sulfides which can be conveniently employed for various moldings, films, fibers and molding materials for mechanical, electrical and electronical parts, and so on.

As a result of extensive studies, it has been found that such a polyarylene sulfide as having a ratio of weight-average molecular weight [Mw] to number-average molecular weight [Mn], i.e., Mw/Mn in a specified range can provide an excellent moldability, particularly an excellent forming property, such as drawing or stretching or the like, so that it can be conveniently molded into a uniform film and fibers without causing thread breakages, and into extrusion-molded or injection-molded products and further that it can produce excellent physical properties without reducing its mechanical strength such as impact strength, etc., its resistance to heat deterioration, its chemical resistance, its long-lasting durability, and so on. It is also found that the polyarylene sulfides with a narrow distribution of molecular weights having such advantages as have been described hereinabove can be prepared with a high efficiency by a specified process containing a polymerization step to be carried out for a short period of time and a specified washing step. It is further to be found that the polyarylene sulfide can provide a resin composition containing a specified amount of the polyarylene sulfide, which can be conveniently used for various molded products, films, fibers, molding materials for mechanical, electrical and electronical parts, and so on.

In order to achieve the above-mentioned objects, the first aspect of the present invention comprises the polyarylene sulfide having the Mw/Mn ranging from 2 to 5.

The second aspect of the present invention comprises the process for the preparation of the polyarylene sulfide having the specified physical properties as have been described hereinabove, which comprises reacting a dihalo-aromatic compound with a sulfur source at a temperature ranging from 220°C to 280°C for 0.1 to 2 hours in an organic polar solvent and washing the resulting polyarylene sulfide in a crude form with an organic polar solvent at a temperature ranging from 100°C to 220°C.

The third aspect of the present invention comprises the resin composition characterized by blending 100 parts by weight of the polyarylene sulfide having the Mw/Mn ranging from 2 to 5 with a filler in an amount ranging from 0.5 part to 500 parts by weight.

FIG. 1 represents a distribution of molecular weights of a polyphenylene sulfide of Example 1.

FIG. 2 represents a distribution of molecular weights of a polyphenylene sulfide of Example 2.

FIG. 3 represents a distribution of molecular weights of a polyphenylene sulfide of Example 3.

FIG. 4 represents an example of a reaction system to be appropriately used for the process according to the present invention.

The polyarylene sulfides according to the present invention have the ratio of weight-average molecular weight [Mw] to number-average molecular weight [Mn], i.e., the Mw/Mn ranging from 2 to 5, preferably from 2.5 to 4.5, more preferably from 2.7 to 4.0.

If the Mw/Mn exceeds the upper limit, on the other hand, a distribution of molecular weights of the resulting polyarylene sulfide becomes so broad that the effect on improvements in moldability, such as a low load during melting, is low and, in particular, that formability, particularly like stretching is so lowered that neither uniform films nor fibers without thread breakages can be prepared or that the resulting polyarylene sulfide may reduce its mechanical strength such as impact resistance or the like, its heat deterioration resistance, its chemical resistance, its long-lasting durability, and so on. If the Mw/Mn is below the lower limit, on the other hand, the resulting polyarylene sulfide is hard to be prepared on an industrial scale.

The polyarylene sulfide according to the present invention may have a molecular weight in the range substantially from 500 to 500,000. If the molecular weight of the resulting polyarylene sulfide include the component of below 500, there is the risk that its mechanical strength such as impact resistance or the like, its long-lasting durability, its chemical resistance and so on are reduced to a remarkably great extent. If the molecular weight of the resulting polyarylene sulfide include the component of exceeds 500,000, a viscosity of the resulting polyarylene sulfide becomes so high and its moldability becomes so poor, particularly formability such as stretching is so reduced, that it is hard to provide uniform films and fibers with no or little thread breakages.

The weight-average molecular weight [Mw] and the number-average molecular weight [Mn] of the polyarylene sulfide may be determined by means of gel permeation chromatography (GPC) using a high-temperature UV detector as described in Japanese Patent Application Nos. 78,345/1988 and 175,100/1988 and PCT/JP89/00601, filed in the name of the present applicant.

Heretofore, a distribution of molecular weights of a polyarylene sulfide cannot be measured by means of a usual GPC device because the temperature for measurement is as high as 200°C or higher so that its UV detector cannot work. Thus a method for measurment by means of a viscosity detector has been proposed by stacy [J. Appl. Polym. Sci., 32, 3959 (1986)]. This method, however, cannot detect a low-molecular composition so that it does not provide an actual distribution of molecular weights and that a distribution of molecular weights, i.e., the Mw/Mn, is as low as approximately 2. Accordingly, a method using a usual refractive index or an ultraviolet/visible light detector has been demanded, and Housaki et al. have developed such a method [Polymer Journal, Vol. 20, No. 12, pp. 1163 - 1166 (1988)].

The distribution of molecular weights of the polyarylene sulfides according to the present invention is determined by means of GPC measurement using the ultraviolet/visible light detector.

The polyarylene sulfides according to the present invention are narrow in a distribution of molecular weights as measured by means of the procedures as have been described hereinabove and excellent in moldability, particularly formability such as stretching or the like, so that, for example, uniform films and fibers without thread breakage can be prepared. Furthermore, they have excellent physical properties without reducing mechanical strength such as impact strength or the like, heat deterioration resistance, chemical strength, long-lasting durability and so on.

The polyarylene sulfides according to the present invention having the excellent properties as have been described hereinabove may be prepared for a short period of time for polymerization and with a high

4

efficiency by means of the process according to the present invention as will be described hereinafter.

The process according to the present invention first provides a crude polyarylene sulfide by reacting a dihalo-aromatic compound with a sulfur source in an organic polar solvent at a temperature ranging from 220 °C to 280 °C for 0.1 to 2 hours.

The organic polar solvent to be used may include, for example, an organic polar solvent such as an amide compound, a lactam compound, a urea compound, a cyclic organophosphorus compound or the like.

The amide compound may include, for example, N,N-dimethylformamide, N,N-dimethylacetamide, N,N-diethylacetamide, N,N-dipropylacetamide, N,N-dimethylbenzoic amide or the like. The lactam compound may include, for example, caprolactam, N- methylcaprolactam, N-ethylcaprolactam, N-isopropylcaprolactam, N-isobutylcaprolactam, N-n-propylcaprolactam, N-n-butylcaprolactam, N-cyclohexylcaprolactam, N-methyl-2-pyrrolidone, N-ethyl-2-pyrrolidone, N-isopropyl-2-pyrrolidone, N-isobutyl-2-pyrrolidone, N-n-propyl-2-pyrrolidone, N-n-butyl-2-pyrrolidone, N-cyclohexyl-2-pyrrolidone, N-methyl-3-methyl-2-pyrrolidone, N-ethyl-3-methyl-2-pyrrolidone, N-methyl-3,4,5-trimethyl-2-pyrrolidone, N-methyl-2-piperidone, N-isopropyl-2-piperidone, N-ethyl-2-piperidone, N-methyl-6-methyl-2-piperidone, N-methyl-3-ethyl-2-piperidone and so on. The urea compound may include, for example, tetramethyl urea, N,N'-dimethylethylene urea, N,N'-dimethylpropylene urea and so on. The cyclic organophosphorus compound may include, for example, 1-methyl-1-oxosulphorane, 1-ethyl-1-oxosulphorane, 1-phenyl-1-oxosulphorane, 1-methyl-1-oxo-phosphorane, 1-n-propyl-1-oxophosphorane, 1-phenyl-1-oxophosphorane and so on.

These solvents may be used singly or in combination of two or more. Preferred are an N-alkyl lactam and an N-alkyl pyrrolidone. More preferred is N-methyl-2-pyrrolidone.

The sulfur source to be used for the process according to the present invention may include, for example, an alkali metal sulfide or an alkaline earth metal sulfide. The alkali metal sulfide may include, for example, lithium sulfide, sodium sulfide, potassium sulfide, rubidium sulfide and cesium sulfide. These alkali metal sulfides may be used singly or in combination of two or more. Among these alkali metal sulfides. lithium sulfide and sodium sulfide are preferred and sodium sulfide is more preferred. The alkaline earth metal sulfides may include, for example, calcium sulfide, strontium sulfide, barium sulfide, magnesium sulfide and so on. These alkaline earth metal sulfides may be used singly or in combination of two or more. Among these alkaline earth metal sulfides, calcium sulfide and barium sulfide are preferred and calcium sulfide is more preferred.

Furthermore, as the alkali metal sulfide, there may be used one obtainable by reacting an alkali metal hydrosulfide with a base. Likewise, there may be used, as the alkaline earth metal sulfide, one obtainable by reacting an alkaline earth metal hydrosulfide with a base. It is also possible to use the alkali metal hydrosulfide and/or the alkaline earth metal hydrosulfide and the base, in place of or in combination with the alkali metal sulfide and/or the alkaline earth metal sulfide. It is further possible to use hydrogen sulfide with the base in place of or in combination with the alkali metal hydrosulfide and/or the alkaline earth metal hydrosulfide or in combination with the alkali metal sulfide and/or the alkaline earth metal sulfide. The alkali metal hydrosulfide to be used may include, for example, lithium hydrosulfide, sodium hydrosulfide, rubidium hydrosulfide, potassium hydrosulfide and cesium hydrosulfide. Sodium hydrosulfide and lithium hydrosulfide are preferred, and sodium hydrosulfide is more preferred. The alkaline earth metal hydrosulfides may include, for example, calcium hydrosulfide, strontium hydrosulfide, barium hydrosulfide, magnesium hydrosulfide and so on. Calcium hydrosulfide and barium hydrosulfide are preferred, and calcium hydrosulfide is more preferred. These hydrosulfides may be used singly or in combination of two or more.

The base to be used with the alkali metal hydrosulfide and/or the alkaline earth metal hydrosulfide and/or hydrogen sulfide may be any base which can convert the alkali metal hydrosulfide and/or the alkaline earth metal hydrosulfide into the corresponding alkali metal sulfide and/or the alkaline earth metal sulfide, respectively, or which can convert the hydrogen sulfide into the corresponding alkali metal hydrosulfide and/or the alkaline earth metal hydrosulfide and further convert it into the corresponding alkali metal sulfide and/or the alkaline earth metal sulfide, respectively, or an acid receptor capable of effectively neutralizing or receiving a hydrogen halide producible by a condensation of the dihalo-aromatic compound with the alkali metal hydrosulfide and/or the alkaline earth metal hydrosulfide and/or the hydrogen sulfide. Although, as the base, there may be used various compounds including any inorganic or organic base as long as it does not impair or impede the objects of the present invention, there may be appropriately used an alkali metal hydroxide in a usual case. The alkali metal hydroxide may include, for example, lithium hydroxide, sodium hydroxide, potassium hydroxide, rubidium hydroxide and cesium hydroxide. Preferred are lithium hydroxide and sodium hydroxide, and more preferred is sodium hydroxide. As the organic base may be enumerated, for example, a metal salt of $\omega$-hydroxycarboxylic acid, an alkali metal aminocarboxylate, and so on. These bases may be used singly or in combination of two or more.

The base may be sufficiently used in an amount ranging usually from approximately 0.80 to 1.2 moles

5

per mole of total hydrogen atoms of the alkali metal hydrosulfide and/or the alkaline earth metal hydrosulfide and/or the hydrogen sulfide.

Among the sulfur sources as have been enumerated hereinabove, there may be preferred lithium sulfide, lithium hydrosulfide, sodium sulfide, and sodium hydrosulfide. Among these sulfur sources, sodium sulfide and sodium hydrosulfide are more preferred.

In the process according to the present invention, as the sulfur source may be used any commonly used compound such as commercially available compounds or industrial grade compounds. The sulfur source may be in the form of an anhydride or a poly-salt hydrate or polyhydrate, such as trihydrate, pentahydrate, hexahydrate or nonahydrate, or in an aqueous mixture. When the polyhydrates are used as they are or when a large amount of water is present in the polycondensation system, it is preferred that dehydration operation be usually carried out prior to polymerization in a manner as will be described hereinafter.

In accordance with the present invention, a polymerization aid may be appropriately employed in polymerizing the dihalo-aromatic compound with the sulfur source. The polymerization aid may include, for example, a metal salt of a carboxylic acid such as sodium acetate or the like, a metal halide such as lithium chloride, calcium chloride or the like, or an alkali metal salt of phosphoric acid such as sodium phosphate or the like. Among these polymerization aids, lithium chloride, sodium acetate and so on. It is also possible to add water as a polymerization aid to the polymerization system in a later stage of polymerization.

The process according to the present invention first involves preparing a mixture of the sulfur source with the organic polar solvent and the polymerization aid to be optionally added and, in usual cases, removing water from the resulting hydrous mixture, for example, by subjecting the resulting mixture to dehydration operation, such as azeotropic distillation, under reduced pressures, using a fractionating tower.

In preparing the hydrous mixture, amounts of the sulfur source, the organic polar solvent, and the polymerization aid to be optionally added are not restricted to particular ones, and it is sufficient in a usual case that the dehydrated mixture resulting from distillation of the hydrous mixture under reduced pressures using the fractionating tower contains the sulfur source and the solvent in such amounts that are conveniently adjusted so as to amount to a quantity of the dihalo-aromatic compound required for the preparation of the polyarylene sulfide in a manner as will be described hereinafter.

In order to allow the dihalo-aromatic compound to be admixed merely in a given amount with the dehydrated mixture, the organic polar solvent may be used in an amount as large as usually from 0.1 to 15 times in weight, preferably from 2 to 5 times in weight, the amount of the sulfur source.

In preparing the dehydrated mixture, the sulfur source and the organic polar solvent may be subjected to dehydration, with the polymerization aid optionally added thereto, by heating the resulting hydrous mixture at the temperature ranging usually from 130°C to 200°C, preferably from 140°C to 170°C. The dehydration at a too low temperature presents the disadvantage that it takes a long time for dehydration or a degree of dehydration becomes insufficient, while the dehydration at a too high temperature causes the organic polar solvent to be decomposed resulting in an increase in production of impurities, etc.

In accordance with the process of the present invention, when the hydrous mixture is subjected to distillation under reduced pressures, it is preferred to set a tower top pressure of the fractionating tower to 200 torr or lower, preferably 150 torr or lower. If the tower top pressure exceeds 200 torr, disadvantages are presented that the heating temperature becomes too high, resulting in decomposition of the solvent, etc.

A reflux ratio in the fractionating tower is not restricted to a particular range and may be in a range within the capacity of the fractionating tower used.

The period of time for dehydration may vary with reduced pressures in the fractionating tower and may range usually from 0.5 to 5 hours, preferably from 1 to 2 hours.

The dehydrated mixture obtainable by the procedures as have been described hereinabove is then admixed with the dihalo-aromatic compound for the preparation of the polyarylene sulfide according to the present invention.

The dihalo-aromatic compound to be used for the present invention may be any known compound which can be used to give the polyarylene sulfide. It may include, for example, a dihalobenzene, such as m-dihalobenzene and p-dihalobenzene, an alkyl-substituted dihalobenzene, such as 2,3-dihalotoluene, 2,5-dihalotoluene, 2,6-dihalotoluene, 3,4-dihalotoluene, 2,5-dihaloxylene, 1-ethyl-2,5-dihalobenzene, 1,2,4,5-tetramethyl-3,6-dihalobenzene and 1-n-hexyl-2,5-dihalobenzene, a cycloalkyl-substituted dihalobenzene, such as 1-cyclohexyl-2,5-dihalobenzene, an aryl-substituted dihalobenzene, such as 1-phenyl-2,5-dihalobenzene, 1-benzyl-2,5-dihalobenzene and 1-p-tolyl-2,5-dihalobenzene, a dihalobiphenyl, such as 4,4´-dihalobiphenyl, and a dihalonaphthalene, such as 1,4-dihalonaphthalene, 1,6-dihalonaphthalene and 2,6-dihalonaphthalene, and so on.

The two halogen atoms on the dihalo-aromatic compounds may be fluorine, chlorine, bromine or iodine

6

atoms and may be identical to or different from each other.

Among those dihalo-aromatic compounds, the dihalobenzene is preferred. Particularly preferred is one containing p-dichlorobenzene in the amount of 70% mole or more.

In the process according to the present invention, the reaction system containing the dihalo-aromatic compound may optionally contain a branching agent such as an active hydrogen-containing halo-aromatic compound, a polyhalo-aromatic compound having three or more halogen atoms in its molecule or a halo-aromatic nitro compound or a molecular weight modifier such as a monohalo-aromatic compound.

The active hydrogen-containing halo-aromatic compound may be a halo-aromatic compound with a functional group having an active hydrogen, such as an amino group, a thiol group or hydroxyl group, and may include, for example, a dihaloaniline, such as 2,6-dichloroaniline, 2,5-dichloroaniline, 2,4-dichloroaniline and 2,3-dichloroaniline, a trihaloaniline, such as 2,3,4-trichloroaniline, 2,3,5-trichloroaniline, 2,4,6-trichloroaniline and 3,4,5-trichloroaniline, a dihaloaminodiphenyl ether, such as 2,2′-diamino-4,4′-dichlorodiphenyl ether and 2,4′-diamino-4,2′-dichlorodiphenyl ether, and so on. In the above halo-aromatic compounds, the amino group may be replaced by the thiol group or the hydroxyl group. It is also possible to use the active hydrogen-containing halo-aromatic compound in which a hydrogen atom or hydrogen atoms connected to the carbon atom or atoms constituting its aromatic ring is or are replaced by another inert group including, for example, a carbohydryl group such as an alkyl group. Among these compounds, the active hydrogen-containing dihalo-aromatic compound is preferred and dichloroanilines are more preferred.

The polyhalo-aromatic compound with three or more halogen atoms in its molecule may include, for example, 1,2,4-trichlorobenzene, 1,3,5-trichlorobenzene and 1,4,6-trichloronaphthalene.

The halo-aromatic nitro compounds may include, for example, a mono- and di-halonitrobenzene, such as 2,4-dichloronitrobenzene and 2,5-dichloronitrobenzene, a dihalo-nitrodiphenyl ether, such as 2-nitro-4,4′-dichlorodiphenyl ether, a dihalo-nitrodiphenyl sulfone, such as 3,3′-dinitro-4,4′-dichlorodiphenyl sulfone, a mono- and di-halo-nitropyridine, such as 2,5-dichloro-3-nitropyridine and 2-chloro-3,5-dinitropyridine, and a dihalo-nitronaphthalene.

The monohalo-aromatic compound to be optionally added as the end-capping agent may include, for example, a chlorobenzene, a bromobenzene, o-chlorotoluene, m-chlorotoluene, p-chlorotoluene, o-bromotoluene, m-bromotoluene and p-bromotoluene.

The optional use of the branching agent such as the active hydrogen-containing halo-aromatic compound, the polyhaloaromatic compound and the halo-aromatic nitro compound and/or the end-capping agent such as the monohalo-aromatic compound may serve as further improving various properties of the resulting polymer according to the present invention, for instance, by increasing a branching degree or a molecular weight of the resulting polymer or decreasing a remaining salt amount.

In the process according to the present invention, the branching agent or the end-capping agent may be used singly or in combination of two or more.

The dihalo-aromatic compound may be optionally used in the amount ranging usually from 0.75 to 2.0 moles, preferably from 0.90 to 1.2 moles, with respect to mole of the sulfur source. This range is generally sufficient because the reaction of the dihalo-aromatic compound with the sulfur source is an equimolar reaction.

The amount of the organic polar solvent is not restricted to a particular range as long as it is sufficient to proceed with the reaction in a homogeneous manner and may range usually from 0.1 to 10 times in weight the total weight of the sulfur source and the other ingredients to be optionally added. If the amount of the organic polar solvent is too small, the reaction may not proceed to a sufficient extent. If the amount of the solvent is too large, a volume efficiency becomes worsened leading to a reduction in productivity.

The ingredients as have been described hereinabove, which are required for polycondensation, are then admixed with the dehydrated mixture and the dihalo-aromatic compound so as to be contained in the amounts within the ranges as have been specified hereinabove.

The polycondensation may be carried out at a temperature which may ranges usually from 220 to 280 preferably from 230 °C to 270 °C. If the reaction temperature is too low, on the one hand, the reaction rate may become too slow that the reaction would not be finished within a range as will be specified hereinafter. If the reaction temperature is too high, on the other hand, side reactions may be caused to occur, thereby leading to deterioration of the resulting polymer and causing it to impart colors or to get gelled.

The polycondensation may be continued for a period of time which may range usually from 0.1 to 2 hours, preferably from 0.1 to 1.5 hours. The reaction for a too short period of time may not proceed to a sufficient extent, while the reaction for a too long period of time may not control the $M_w/M_n$ within the specified range.

7

The polycondensation reaction may also be implemented in an inert gas such as nitrogen, argon, carbon dioxide or the like.

Although a reaction pressure for the polycondensation is not restricted to a particular range, it may usually range from a self pressure of the polycondensation reaction system to 50 kg/cm$^2$ (absolute pressure).

The polycondensation may be carried out as a one-stage reaction to be implemented at a stationary temperature or as a multi-stage reaction in which the reaction temperature is raised stepwise or in which it is gradually elevated continuously.

The reaction procedures as have been described hereinabove provide the polyarylene sulfides in a crude form, which in turn are washed with an organic polar solvent at the temperature ranging from 100 °C to 220 °C, thereby controlling the ratio of weight-average molecular weight [Mw] to number-average molecular weight [Mn] or the Mw/Mn within the range from 2 to 5. If the washing temperature is too low, on the one hand, the low-molecular weight components in the resulting crude polyarylene sulfide may not be dissolved to a sufficient extent, thereby failing to control the Mw/Mn within the above-specified range. If the washing temperature becomes too high, on the other, the effect to be otherwise achieved by washing at high temperatures cannot be given, leading to no economical advantages.

The organic polar solvent to be used for the washing of the crude polyarylene sulfide may be the same as that used for the production of the crude polyarylene sulfide in the manner as have been described hereinabove. It is thus possible to wash the crude polyarylene sulfide with a specific organic polar solvent that is specifically the same as or different from the solvent for washing the polyarylene sulfide in a crude form.

As have been described hereinabove, the washing of the curde polyarylene sulfide with the organic polar solvent permits control over the ratio of the weight-average molecular weight [Mw] to the number-average molecular weight [Mn], i.e., the Mw/Mn within the range as have been specified hereinabove.

Thereafter, the resulting polymer is washed with water in a usual case. The washing with water can further remove the alkali metal halide, sulfur source, polymerization aid and by-products contained in the resulting polymer. Washing with water can yield the polyarylene sulfide having the Mw/Mn in the range as have been specified hereinabove.

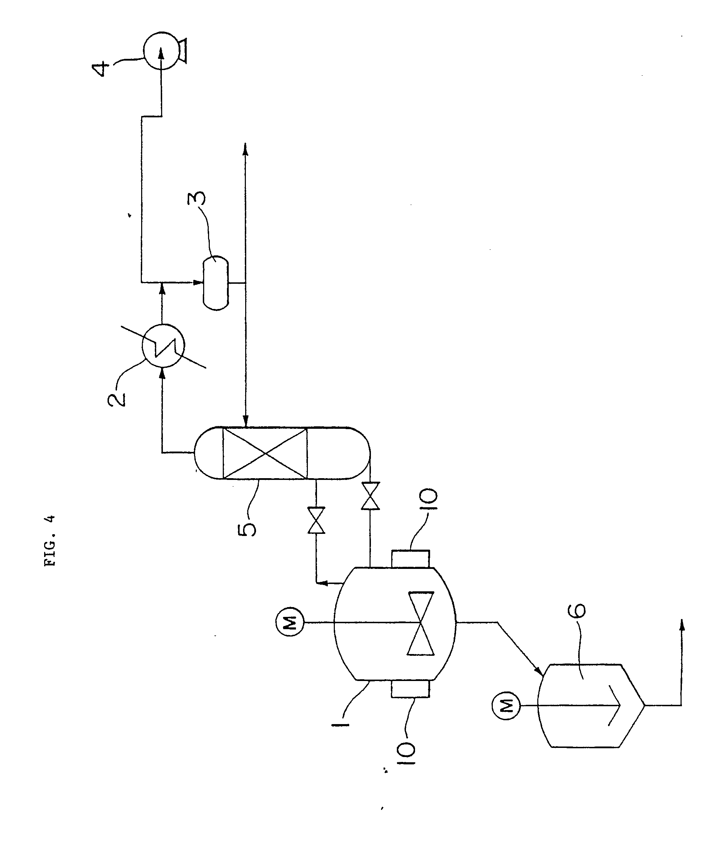

It is to be noted that the reaction process according to the present invention may be appropriately carried out using a reaction system as shown in FIG. 4. The reaction system comprises a reactor vessel 1 with a stirrer, a condenser 2, a fractionating tower 5 connected to a receiver 3 and a vacuum pump 4, and a washing vessel 6 with a stirrer.

In the process according to the present invention, the mixture dehydrated by means of the fractionating tower 5 is then fed to the reactor vessel 1 where the resulting dehydrated mixture is admixed and reacted with the dihalo-aromatic compound, thereby yielding the polyarylene sulfide in a crude form. The resulting crude polyarylene sulfide is then fed to the washing vessel 6 in which a screen (not shown) in 10 to 200 mesh is disposed, thereby separating the resulting polymer from the reaction mixture. The polymerization aid used may be recovered from the reaction mixture and/or washings and then purified for re-use.

In FIG. 4, reference numeral 10 denotes a jacket.

The process according to the present invention can provide the polyarylene sulfide having the Mw/Mn within the range as have been specified hereinabove within a short period of time for polymerization and with a high productivity.

The polyarylene sulfide according to the present invention, which may be prepared by the process according thereto, may be appropriately used for the resin composition according to the present invention. The resin composition contains at least the polyarylene sulfide and a filler.

The filler may be preferably an inorganic filler which may include, for example, a carbonate, such as calcium carbonate, magnesium carbonate and dolomite, a sulfate, such as calcium sulfate and magnesium sulfate, a sulfite, such as calcium sulfite, talc, clay, mica, titania, zirconia, ferrite, asbestos, glass fibers, a silicate, such as calcium silicate, montmorillonite and bentonite, powders of a metal such as iron, zinc, copper, aluminium, and nickel, a ceramic, such as silicon carbide, silicon nitride and boron nitride and a whisker thereof, carbon black, graphite, carbon fibers, and so on. These inorganic fillers may be used singly or in combination of two or more. The resin composition according to the present invention may contain an organic filler, such as wood flour, coconut shell flour, cork powders, floc and so on, in place of the inorganic filler, or optionally with the inorganic filler. The fillers may not be restricted to their particular shapes and they may be in any form, such as powders, granules, plates or fibers. particularly the fillers in the fibrous form may significantly improve a modulus and a heat resistance of the resulting resin composition. The fillers may be in an average particle size or in an average fiber size of usually 20$\mu$ m or smaller and their optimum size may be appropriately chosen so as to be adapted to the object expected to be achieved by

8

the addition of the fillers. The filler in a too large average particle or fiber size may incur the risk of reducing a dispersion thereof in the composition.

The resin composition according to the present invention comprises blending 100 parts by weight of the polyarylene sulfide with the filler in the amount ranging usually from 0.5 parts to 500 parts by weight, preferably from 1 part to 300 parts by weight. If the amount of the filler is too small, no effect by adding the filler can be achieved. If the amount of the filler is too large, kneading performance, dispersion as well as mechanical strength of the resulting composition may be impaired or reduced.

The resin composition according to the present invention may optionally contain an additive such as another polymer, a stabilizer, a lubricant and so on. For the resin composition, another polymer, such as a polyester, polyamide, polyamide ester, polycarbonate, a crystalline polyester or the like, so as to amount to 1 to 80 parts by weight with respect to the filler.

In accordance with the present invention, the resulting resin composition is provided with further improved properties, such as mechanical strength, long-lasting durability, chemical resitance and so on, whereby it can be used appropriately for various molded articles, such as films and fibers, molding materials for various mechanical, electrical and electronical parts, and so on.

The present invention will be described more in detail by way of examples.

Example 1:

The reactor vessel 1 of the reaction system having the structure as shown in FIG. 4 was charged with 7.06 kg (42 moles) of sodium sulfide pentahydrate ($Na_2S \cdot 5H_2O$), 1.78 kg (42 moles) of lithium chloride (LiCl) and 25 liters of N-methyl- 2-pyrrolidone (NMP), and the mixture was refluxed in the fractionating tower 5 at the temperature of 149 and the tower top pressure of 100 torr for 1 hour. After the resulting dehydrated mixture was allowed to cool to 50 °C , 6.17 kg (42 moles) of p-dichlorobenzene (P-DCB) was added. After the reactor vessel 1 was closed, the temperature was elevated to 235 and the mixture was reacted at that temperature under pressure of 2.0 kg/cm²G for 1 hour. The reaction mixture was then allowed to cool to room temperature, yielding a crude product in a slurry form. The crude product was fed to the washing vessel 6 where it was washed with 20 liters of NMP at the temperature of 160 °C for 1 hour. Thereafter, the resulting mixture was filtered through a 60-mesh screen in the washing vessel 6 and the resulting polyphenylene sulfide was washed three times with 20 liters of purified water, followed by drying in vacuo at 180 °C for 5 hours.

The resulting polymer was measured for its inherent viscosity, $\eta$ inh, using an $\alpha$ -chloronaphthalene solvent at 206 °C in the concentration of 0.4 g/dl. Its inherent viscosity, $\eta$ inh, was found to be 0.257.

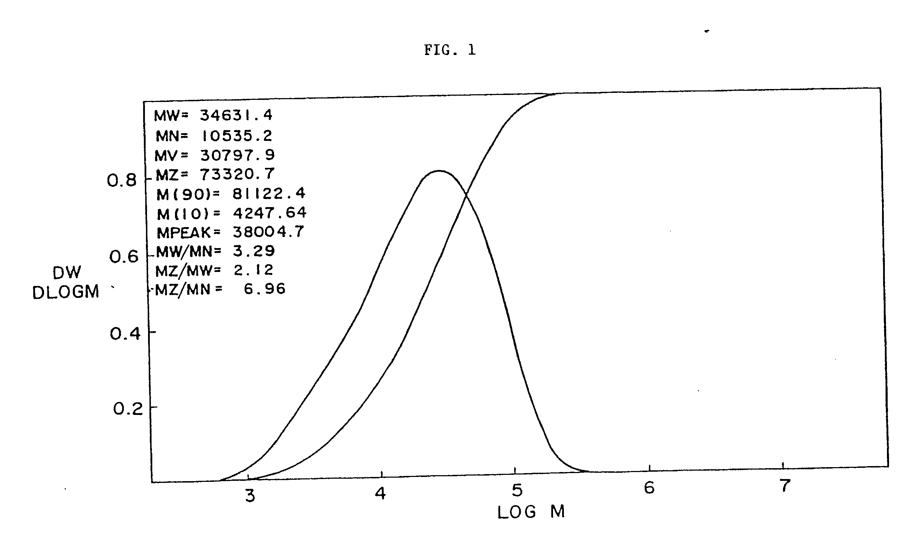

It was further measured for its molecular weight distribution, by means of GPC using the high-temperature UV detector as disclosed in the above literature. Its molecular weight distribution is as shown in FIG. 1, and its ratio of weight-average molecular weight to number-average molecular weight, or the Mw/Mn was found to be 3.29.

The molecular weight distribution was measured under the following conditions:
Test Device: Gel permeation chromatography with a high-temperature UV detector
Solvent: $\alpha$ -chloronaphthaline
Solvent Temperature: 210 °C
Sample Concentration: 0.2%
Flow Rate of Sample: 1 ml per minute
Separating Column: polyethylene: AT800P + AT8OM/S× 2 [Showa Denko K.K.]
UV Absorption Wavelength: 356 nm

The preparation conditions and test results are shown in Table 1 below.

Example 2:

Polyphenylene sulfide was prepared in substantially the same manner as in Example 1 with the exception that the reaction after dehydration was carried out by elevating the reaction temperature to 239 °C from 235 °C and the reaction pressure to 2.4 kg/cm²G from 2.0 kg/cm²G, and shortening the reaction time to 0.17 hour from 1 hour.

The resulting polymer was measured for its inherent viscosity, $\eta$ inh, using an $\alpha$ -chloronaphthalene solvent at 206 °C in the concentration of 0.4 g/dl. Its inherent viscosity, $\eta$ inh, was found to be 0.268.

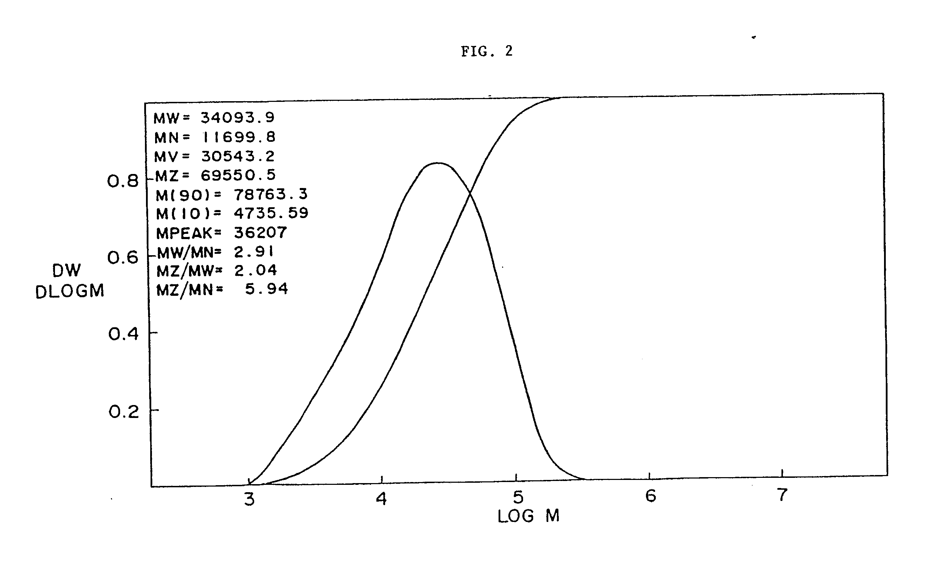

It was further measured for its molecular weight distribution, by means of GPC using the high-temperature UV detector as disclosed in the above literature. Its molecular weight distribution is as shown in FIG. 2, and its ratio of weight-average molecular weight to number-average molecular weight, or the Mw/Mn ratio, was found to be 2.91.

The preparation conditions and test results are shown in Table 1 below.

Example 3:

This example is out of scope of this invention.

Polyphenylene sulfide was prepared in substantially the same manner as in Example 1 with the exception that the reaction after dehydration was carried out by elevating the reaction temperature to 260 $^{\circ}$C from 235 $^{\circ}$C and the reaction pressure to 5.2 kg/cm$^2$G from 2.0 kg/cm$^2$G, and extending the reaction time to 4 hours from 1 hour.

The resulting polymer was measured for its inherent viscosity, $\eta$ inh, using an $\alpha$-chloronaphthalene solvent at 206 $^{\circ}$C in the concentration of 0.4 g/dl. Its inherent viscosity, $\nu$ inh, was found to be 0.311.

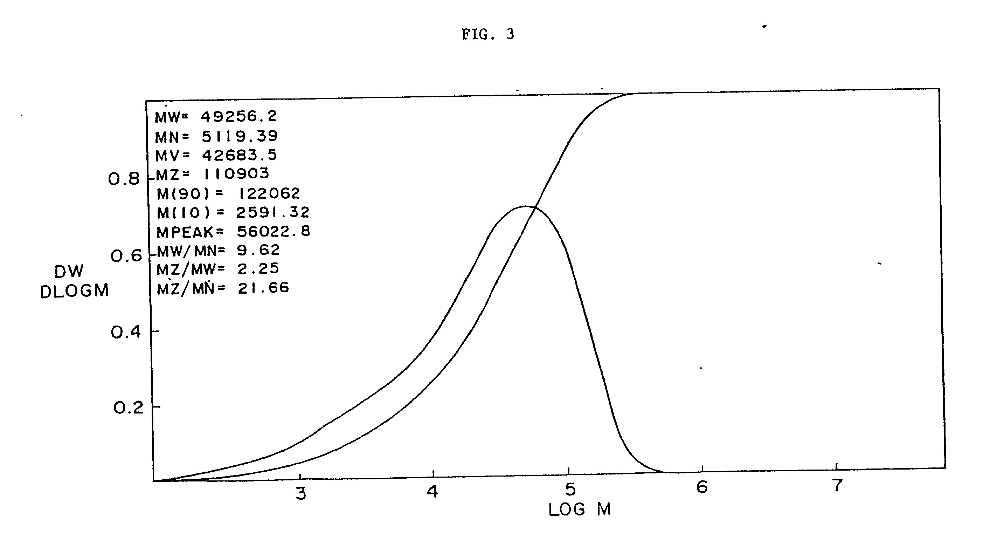

It was further measured for its molecular weight distribution, by means of GPC using the high-temperature UV detector as disclosed in the above literature. Its molecular weight distribution is as shown in FIG. 3, and its ratio of weight-average molecular weight to number-average molecular weight, or the Mw/Mn, was found to be 9.61.

The preparation conditions and test results are shown in Table 1 below.

Example 4:

A mixture containing 60 parts by weight of polypheny lene sulfide prepared in Example 2 and 40 parts by weight of glass fibers ("GF FT525"; Asahi Glass Fiber K.K.) was melt-kneaded and extruded into pellets by means of an extrusion molding machine having a 20-mm nozzle at 80 rpm. The pellets were then injection-molded at 320 $^{\circ}$C into a sample in a strip form (127 mm x 12.7 mm x 3.2 mm).

The sample was measured for its bending strength (in accordance with ASTM D-790) and Izod impact strength (in accordance with ASTM D-256).

The molding conditions and test results are shown in Table 2 below.

Example 5:

This example is out of scope of this invention.

A sample was prepared in substantially the same manner as in Example 4 with the exception that the polyphenylene sulfide prepared in Comparative Example 3 was used in place of the polyphenylene sulfide of Example 2 and the mixture was molded under conditions as will be shown in Table 2 below.

The sample was measured for its bending strength and Izod impact strength in the same manner as in Example 4.

The molding conditions and test results are shown in Table 2 below.

TABLE 1

|  | EXAMPLE 1 | EXAMPLE 2 | EXAMPLE 3 |
|---|---|---|---|
| Charging Conditions:<br>NMP, liters<br>$Na_2S \cdot 5H_2O$, moles<br>LiCl, moles<br>P-DCB, moles | 25<br>42<br>42<br>42 | 25<br>42<br>42<br>42 | 25<br>42<br>42<br>42 |
| Dehydrating Conditions:<br>Temperature, °C<br>Pressure, torr | 149<br>100 | 149<br>100 | 149<br>100 |
| Reaction Conditions:<br>Temperature, °C<br>Pressure, $kg/cm^2G$<br>Reaction Time, hour | 235<br>2.0<br>1.0 | 239<br>2.4<br>0.17 | 260<br>5.2<br>4.0 |
| Washing Conditions:<br>Temperature, °C<br>Time, hour | 160<br>1.0 | 160<br>1.0 | 160<br>1.0 |
| Inherent Viscosity, $\eta$ inh | 0.257 | 0.268 | 0.311 |
| Mw/Mn | 3.29 | 2.91 | 9.62 |

As is apparent from Table 1 above, the polyphenylene sulfide prepared in Example 3 where the reaction time is beyond the specified reaction time range for the present invention is broader in molecular weight distribution and greater in the Mw/Mn than those prepared in Examples 1 and 2.

TABLE 2

|  |  | EXAMPLE 4 | EXAMPLE 5 |
|---|---|---|---|
| Melt-Extruding Temp., °C |  | 315 | 315 |
| Motor Current, A |  | 2.2 | 3.1 |
| Resin Pressure, $kg/cm^2$ |  | 6-8 | 20 - 26 |
| Injection-Molding Pressure, $kg/cm^2$ |  | 250 | 370 |
| Bending Strength, $kg/cm^2$ |  | 2,470 | 2,360 |
| Bending Modulus, $kg/cm^2$ |  | 13,900 | 13,700 |
| Izod Impact strength, kg·cm/cm | Notched | 9.3 | 8.4 |
|  | Unnotched | 55 | 47 |

As is apparent from Table 2 above, it is found that the resin composition of Example 5 prepared by using the polyphenylene sulfide of Example 3 above, which has a broader molecular weight distribution, is higher in extruding load and pressure at the same resin temperature, poorer in moldability, and higher in injecting temperature, than that prepared in Example 4 according to the present invention. Furthermore, the resin composition of Example 5 is lower in bending strength and Izod impact strength than that of Example 4.

In summary, the present invention offers the advantages as follows:

(1) The polyarylene sulfide according to the present invention is narrow in molecular weight distribution as low as the ratio of weight-average molecular weight [Mw] to number-average molecular weight [Mn], namely, the Mw/Mn, in the range from 2 to 5, so that it is superior in extrusion molding and injection molding, particularly in formability such as stretching, thereby providing, for example, uniform films and fibers with no or little thread breakages. It causes no or little reduction in its mechanical strength such as impact strength or the like, its heat deterioration resistance, its chemical resistance, and its long-lasting durability, an so on, so that it is favorable in physical properties and gives an industrially useful material.

(2) The process for the preparation of the polyarylene sulfide according to the present invention comprises reacting the dihalo-aromatic compound with the sulfur source in the organic polar solvent at the temperature ranging from 220 to 280°C for 0.1 to 2 hours, thereby yielding the polyarylene sulfide in a crude form, and then washing the crude polymer with an organic polar solvent at the temperature ranging from 100°C to 220°C, whereby the polyarylene sulfide according to the present invention is yielded. Thus, the process according to the present invention is advantageous because the polymer can be prepared for a short period of time for polymerization and with a high productivity.

(3) The present invnetion further provides the novel resin composition containing the polyarylene sulfide according to the present invention, which has the excellent properties as have been described hereinabove, by blending the polyarylene sulfide and the filler in the amount range as have been specified hereinabove. Thus the resin composition according to the present invention is provided with further improved physical properties such as mechanical strength such as impact resistance or the like, heat resistance, heat rigidity resistance, chemical resistance, long-lasting durability and so on, so that it can be appropriately used for various molded articles such as films and fibers, various molding materials such as injection-molding materials for mechanical, electrical and electronical parts, and so on.

## Claims

1. A polyarylene sulfide having a ratio of weight-average molecular weight [Mw] to number-average molecular weight [Mn]. i.e., a Mw/Mn, ranging from 2 to 5.

2. A polyarylene sulfide as claimed in claim 1, wherein said polyarylene sulfide has a molecular weight ranging substantially from 500 to 500,000.

3. A polyarylene sulfide as claimed in claim 1. wherein said polyarylene sulfide is polyphenylene sulfide.

4. A process for preparing a polyarylene sulfide as claimed in claim 1, comprising the steps of:
reacting a dihalo-aromatic compound with a sulfur source in an organic polar solvent at a temperature ranging from 220°C to 280°C for 0.1 to 2 hours, yielding the polyarylene sulfide in a crude forms; and
washing the crude polyarylene sulfide with an organic polar solvent at a temperature ranging from 100°C to 220°C.

5. A process as claimed in claim 4, wherein:
a mixture of the sulfur source with a polymerization aid is dehydrated in the organic polar solvent to thereby give a dehydrated mixture;
said dehydrated mixture is admixed with the dihalo- aromatic compound; and
the resulting mixture is reacted at a temperature ranging from 220°C to 280°C for 0.1 to 2 hours, thereby yielding said crude polyarylene sulfide.

6. A process as claimed in claim 5, wherein said sulfur source is an alkali metal sulfide and said polymerization aid is a metal salt of a carboxylic acid or a lithium halide.

7. A process as claimed in claim 6, wherein said lithium halide is lithium chloride.

8. A process as claimed in claim 5, wherein said mixture containing the sulfur source and the polymerization aid is dehydrated under distillation conditions at a distillation temperature ranging from 140°C to 170°C and a tower top pressure of 200 torr or lower for a distillation time for 0.5 to 5 hours.

9. A process as claimed in claim 4, wherein said crude polyarylene sulfide is filtered with a filter in 10 to 200 mesh after washing.

10. A polyarylene sulfide-containing resin composition comprising blending 100 parts by weight of the polyarylene sulfide as claimed in claim 1 with a filler in an amount ranging from 0.5 part to 500 parts by weight.

11. A polyarylene sulfide-containing resin composition as claimed in claim 10, wherein said filler is a fibrous inorganic filler.

12. A polyarylene sulfide-containing resin composition as claimed in claim 10, wherein said filler is glass fibers.

FIG. 1

MW= 34631.4
MN= 10535.2
MV= 30797.9
MZ= 73320.7
M(90)= 81122.4
M(10)= 4247.64
MPEAK= 38004.7
MW/MN= 3.29
MZ/MW= 2.12
MZ/MN= 6.96

DW
DLOGM

LOG M

EP 0 379 014 A2

FIG. 2

EP 0 379 014 A2

FIG. 3

MW= 49256.2
MN= 5119.39
MV= 42683.5
MZ= 110903
M(90)= 122062
M(10)= 2591.32
MPEAK= 56022.8
MW/MN= 9.62
MZ/MW= 2.25
MZ/MN= 21.66

DW
DLOGM

LOG M

EP 0 379 014 A2

FIG. 4

EP 0 379 014 A2